Europäisches Patentamt

European Patent Office

Office européen des brevets

(19)

(11) Veröffentlichungsnummer: **0 092 602**
**B1**

# (12) EUROPÄISCHE PATENTSCHRIFT

(45) Veröffentlichungstag der Patentschrift:
05.11.86

(21) Anmeldenummer: **82110504.6**

(22) Anmeldetag: **13.11.82**

(51) Int. Cl.⁴: **B 64 G 1/64**

(54) Ankoppelvorrichtung für Raumflugkörper.

(30) Priorität: **23.04.82 DE 3215229**

(43) Veröffentlichungstag der Anmeldung:
**02.11.83 Patentblatt 83/44**

(45) Bekanntmachung des Hinweises auf die Patenterteilung:
**05.11.86 Patentblatt 86/45**

(84) Benannte Vertragsstaaten:
**FR GB IT NL**

(56) Entgegenhaltungen:
**US-A-3 508 723**
**US-A-3 526 372**
**US-A-4 177 964**
**US-A-4 195 804**

(73) Patentinhaber: **ERNO Raumfahrttechnik Gesellschaft mit beschränkter Haftung, Hünefeldstrasse 1-5, D-2800 Bremen (DE)**

(72) Erfinder: **Bock, Jürgen, Jahnstrasse 3, D-2870 Delmenhorst (DE)**
Erfinder: **Richter, Horst, Aumunder Strasse 1, D-2870 Delmenhorst (DE)**
Erfinder: **Gloyer, Gerd, Wilhelm- Busch- Weg 45, D-2875 Ganderkesee (DE)**
Erfinder: **Felkai, Roland, Leher Heestrasse 4, D-2800 Bremen 33 (DE)**

EP 0 092 602 B1

## Beschreibung

Die Erfindung bezieht sich auf eine Ankoppelvorrichtung für Raumflugkörper mit einem Kupplungstrichter an einem Raumflugkörper und einer Sperrfalle am Trichtergrund in die ein mit einer Rastklinke versehenes Kopfstück eines an einem zweiten Raumflugkörper ausfahrbar angebrachten und mit einer optischen Steuereinrichtung ausrichtbaren Teleskopstabes einführbar ist.

Zum Ankoppeln von Raumflugkörpern ist es notwendig, besondere Ankoppelvorrichtungen zu benutzen. Solche Ankoppelvorrichtungen müssen in der Lage sein, zwei sich im Raum einander nähernde Raumflugkörper auch bei ungenügender Ausrichtung sicher zu koppeln. Außerdem haben derartige Ankoppelvorrichtungen die Aufgabe die kinetische Energie beim Berühren der Raumfahrzeuge zu absorbieren und die Raumfahrzeuge starr zu koppeln.

Wie aus der US-A-41 77 964 bekannt, lassen sich zwei Raumflugkörper beim gegenseitigen Annähern im Weltraum mit Hilfe eines Teleskopstabes an einem Raumflugkörper und eines Trichters am anderen Raumflugkörper koppeln. Der Teleskopstab ist hierzu mit einem spreizbaren Kopfstück versehen, das in ein kugelförmiges Rastloch am Trichtergrund eingeführt und verriegelt werden kann. Außerdem ist der Teleskopstab schwenkbar an seinem Raumflugkörper angebracht, um bei Fehlausrichtungen nachgestellt werden zu können. Hierzu ist der den Teleskopstab tragende Raumflugkörper mit einem optischen Sensor versehen, der die Lichsignale eines am anderen Raumflugkörper angebrachten optischen Senders erfaßt. Fehlausrichtungen können jedoch nur dann ausgeglichen werden, wenn die Raumflugkörper eine bestimmte Winkelstellung zueinander einnehmen. Dies kann aber nicht immer gewährleistet werden und daher ist diese Ankoppelvorrichtung noch unbefriedigend.

Der Erfindung liegt daher die Aufgabe zugrunde, eine Ankoppelvorrichtung für Raumflugkörper der eingangs genannten Art vorzusehen, die bei Fehlausrichtungen jeder Art in der Lage ist, zwei sich annähernde Raumflugkörper sicher zu koppeln. Gemäß der Erfindung ist diese Aufgabe dadurch gelöst, daß der Teleskopstab mit Federn abgestützt ist, und daß das Kopfstück zum Erfassen von Lichtsignalen eines am Trichtergrund angeordneten Lichtsenders einen optischen Sensor aufweist, dessen Ausgangssignale über eine Regeleinrichtung Stellglieder des Teleskopstabes zum Ausrichten steuern.

Die erfindungsgemäße Maßnahme hat aufgrund der federnden Abstützung des Teleskopstabes zur Folge, daß dieser bei einem Koppelvorgang durch Berühren der Trichterwand federnd nachgibt und dadurch Fehlausrichtungen je nach Abmessungen der Raumflugkörper und der Ankoppelvorrichtung bis zu einem bestimmten Raumwinkel und einem bestimmten Versatz ausgleichen kann. Die den Federn des Teleskopstabes zugeordneten Stellglieder machen die Ankoppelvorrichtung in Verbindung mit der in der Kopplungsachse der Raumflugkörper liegenden optischen Regeleinrichtung unempfindlich gegen Winkelfehlausrichtungen. Der Teleskopstab kann hierbei mit einem ringförmigen Zentrierpuffer und einem daran angebrachten Stoßkissen zum weiteren Ausrichten und zum Absorbieren der kinetischen Energie der Raumflugkörper versehen sein. Für den optischen Sensor kann dabei ein Quadrantenfotodiode benutzt werden, deren Ausgangssignale über die Regeleinrichtung die Stellglieder des Teleskopstabes zum automatischen Nachführen des Teleskopstabes in Richtung des Lichtsenders steuern.

Der am Trichtergrund angeordnete Lichtsender kann dabei als Leitbake moduliertes Licht mit einem an den Trichterwinkel angepaßten Öffnungswinkel abstrahlen. Außerdem ist es zweckmäßig, die zum Ausrichten des Teleskopstabes den Stellgliedern zugeführten Steuersignale gleichzeitig einem in betreffenden Raumflugkörpern vorgesehenen Bahnsteuerungssystem zuzuführen, zum Annähern des Raumflugkörpers an den zweiten Raumflugkörper.

Die Erfindung wird anhand der beiliegenden Zeichnung näher erläutert.

Es zeigen:

Fig. 1 zwei Raumflugkörperin einer Anfangsphase beim Ankoppeln,

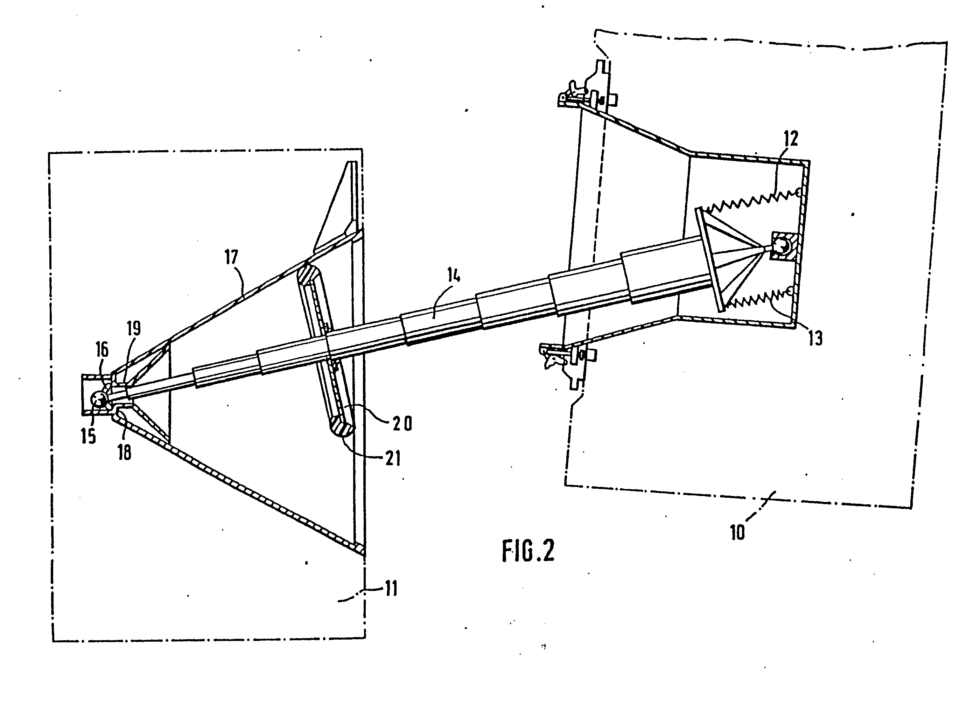

Fig. 2 die Raumflugkörper nach Fig. 1 in einer Zwischenphase beim Ankoppeln,

Fig. 3 die gekoppelten Raumflugkörper in ausgerichteter Raumposition,

Fig. 4 zwei Raumflugkörper mit steuerbarem Teleskopstab und

Fig. 5 die Erzeugung von Positionssignalen zur Steuerung der den Teleskopstab ausrichtenden Stellglieder.

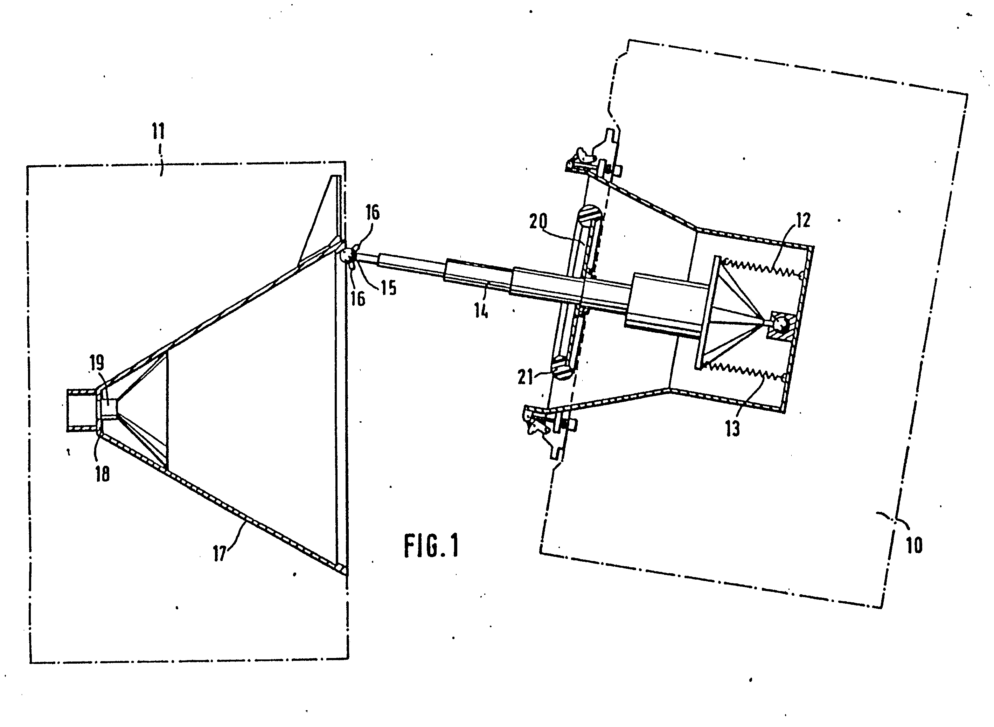

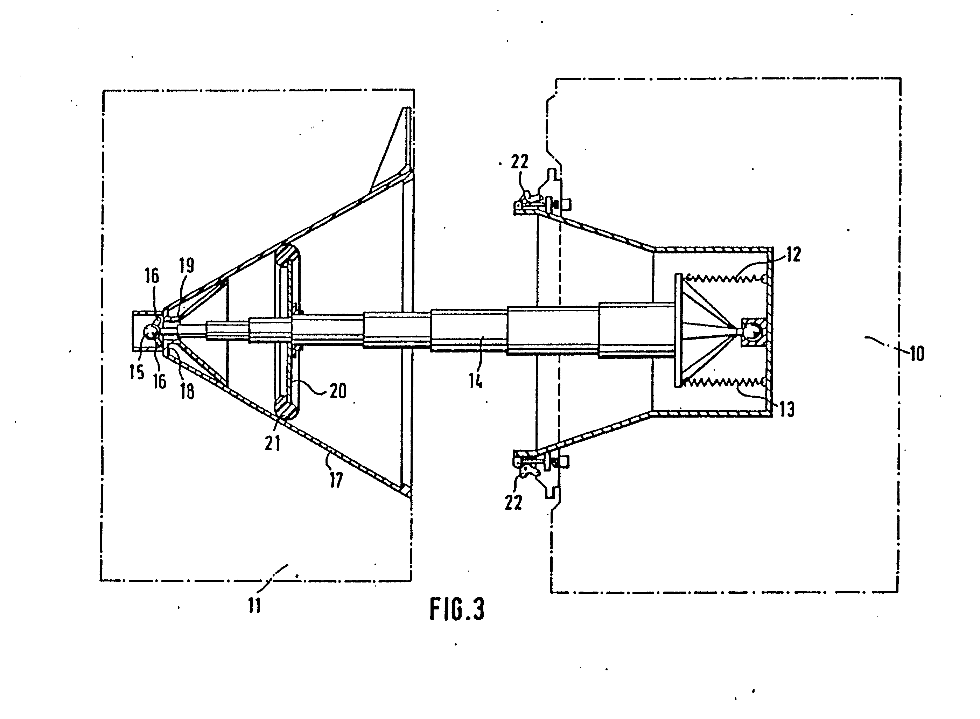

Wie die Darstellung nach Fig. 1 zeigt, befinden sich zwei Raumflugkörper 10, 11 in einer Anfangsphase bei einem Ankoppelvorgang. Der Raumflugkörper 10 besitzt einen mit Federn 12, 13 abgestützten Teleskopstab 14, der mit Hilfe einer nicht näher dargestellten aufrollbaren Blattfeder in bekannter Weise einund ausfahrbar ist. Dieser Teleskopstab besitzt an seinem freien Ende ein Kopfstück 15 mit Rastklinken 16. Der zweite Raumflugkörper 11 besitzt als Kupplungsgegenstück einen Kupplungstrichter 17 mit einer am Trichtergrund 18 vorgesehenen Sperrfalle 19 für die Rastklinken 16. In der in Fig. 1 dargestellten Lage befinden sich die Raumflugkörper 10, 11 in einer Anfangsphase des Kopplungsvorganges, wo das Kopfstück 15 des noch nicht voll ausgefahrenen Teleskopstabes am oberen Rand in den Kupplungstrichter 17 eingreift. Beim weiteren Ausfahren des Teleskopstabes 14 schieben sich die oberen Teile des Teleskopstabes 14 aufgrund dort in geringerem Maße auftretender Reibungskräfte weiter heraus, so daß das Kopfstück 15 an der Wand des Kupplungstrichters 17 entlang gleitet, bis sich das Kopfstück 15 durch die Sperrfalle 19 durchschiebt und die Rastklinken 15 einrasten. Ein ringförmiger Zentrierpuffer 20 mit einem Stoßkissen 21 an Teleskopstab 14 dient dabei zum Ausrichten des Teleskopstabes 14 im Kupplungstrichter 17 sowie zum Absorbieren der kinetischen Energie. In Verbindung mit Fig. 3 kann somit festgestellt werden, daß beim Einfahren des Teleskopstabes 14 der ringförmige Zentrierpuffer 20 durch Anlegen an die Wand des Kupplungstrichters 17 für eine exakte Ausrichtung der Raumflugkörper 10, 11 sorgt, so daß bei einem weiteren Zusammenfahren des Teleskopstabes 14 die Raumflugkörper mit Riegelelementen 22 starr verriegelbar sind. Es ist damit ein einwandfreier Kupplungsvorgang möglich.

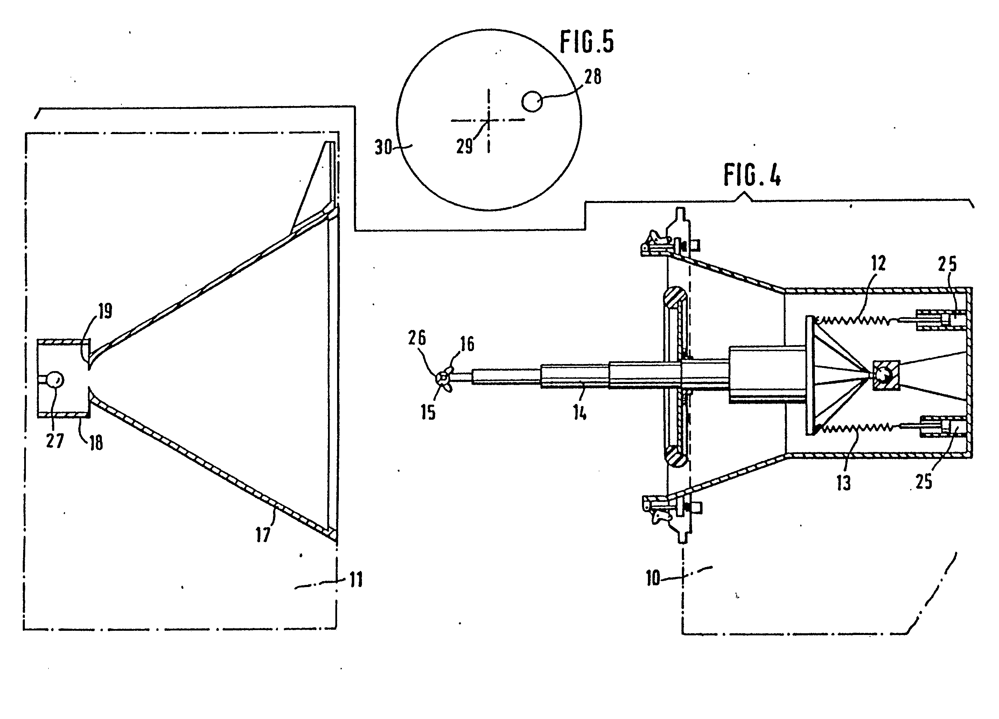

Wie aus Fig. 4 hervorgeht, können die Raumflugkörper l0, 11 auch mit Steuerorganen für einen sich automatisch steuernden Kupplungsvorgang versehen werden. Bei diesem Ausführungsbeispiel sind den Federn 12, 13 des Teleskopstabes 14 Stellglieder 25 zugeordnet, welche eine gesteuerte Ausrichtung des Teleskopstabes erlauben. Außerdem ist im Kopfstück 15 ein optischer Sensor 26, z.B. eine Quadrantenfotodiode, vorgesehen, welcher das von einem am Trichtergrund 18 angeordneten Lichtsender 27 abgestrahlte Licht erfaßt. Der Öffnungswinkel des Lichtsenders 27 ist dabei an den Trichterwinkel des Kupplungstrichters 17 angepaßt. Mit Hilfe des Lichtsenders 27 und des optischen Sensors 26 ist es, wie Fig. 5 zeigt, möglich, aus der Lage 28 des empfangenen Lichtes zum Zentrum 29 eines Empfangsbereiches 30 ein die Ablage repräsentierendes elektrisches Ausgangssignal zu erzeugen und einer Regeleinrichtung zum Steuern der Stellglieder 25 zuzuführen. Es ist damit möglich, den Teleskopstab 14 dem Lichtsender 27 nachzuführen und so für eine automatische Ausrichtung der Raumflugkörper zu sorgen. Der Lichtsender 27 kann dabei als Lichtbake auch moduliertes Licht abstrahlen, wodurch die Signalübertragung störsicherer gegen Einfall von Fremdlicht wird. Die auf diese Weise erzeugbaren Signale können gleichzeitig auch einem im betreffenden Raumflugkörper 10 vorgesehenen Bahnsteuerungssystem zugeführt werden, so daß auch eine gesteuerte Annäherung der Raumflugkörper 10, 11) beim Kupplungsvorgang erfolgt.

### Bezugszeichenliste

10 Raumflugkörper
11 -"
12 Feder
13 -"
14 Teleskopstab
15 Kopfstück
16 Rastklinke
17 Kupplungstrichter
18 Trichtergrund
19 Sperrfalle
20 Zentrierpuffer
21 Stoßkissen
22 Riegelelement
25 Stellglied
26 optischer Sensor
27 Lichtsender
28 Lichtlage
29 Zentrum
30 Empfangsbereich-

### Patentansprüche

1. Ankoppelvorrichtung für Raumflugkörper mit einem Kupplungstrichter (17) an einem Raumflugkörper (11) und einer Sperrfalle (19) am Trichtergrund (18) in die ein mit einer Rastklinke (16) versehenes Kopfstück (15) eines an einem zweiten Raumflugkörper (10) ausfahrbar angebrachten und mit einer optischen Steuereinrichtung ausrichtbaren Teleskopstabes (14) einführbar ist, dadurch gekennzeichnet, daß der Teleskopstab (14) mit Federn (12, 13) abgestützt ist, und daß das Kopfstück (15) zum Erfassen von Lichtsignalen eines am Trichtergrund (18) angeordneten Lichtsenders (27) einen optischen Sensor (26) aufweist, dessen Ausgangssignale über eine Regeleinrichtung Stellglieder (25) des Teleskopstabes (14) zum Ausrichten steuern.

2. Ankoppelvorrichtung nach Anspruch 1, dadurch gekennzeichnet, daß der Teleskopstab (14) einen ringförmigen Zen-trierpuffer.(2O) mit einem Stoßkissen (21) zum Ausrichten der zu koppelden Raumflugkörper (10, 11) aufweist.

3. Ankoppelvorrichtung nach Anspruch 1 oder 2, dadurch gekennzeichnet, daß die Stellglieder (25) zum Ausrichten des Teleskopstabes (14) den Federn (12,13) zugeordnet sind.

4. Ankoppelvorrichtung nach einem der Ansprüche 1 bis 3, dadurch gekennzeichnet, daß für den optischen Sensor (26) eine Quadrantenfotodiode eingesetzt ist.

5. Ankoppelvorrichtung nach Anspruch 4, dadurch gekennzeichnet, daß die Ausgangssignale der Quadrantenfotodiode (26) die Stellglieder (25) des Teleskopstabes (14) über die Regeleinrichtung (14) in Richtung des Lichtsenders (27) steuern.

6. Ankoppelvorrichtung nach einem der Ansprüche 1 bis 5, dadurch gekennzeichnet, daß der am Trichtergrund (18) angeordnete Lichtsender (27) als Leitbake moduliertes Licht mit einem an den Trichterwinkel angepaßten Öffnungswinkel abstrahlt.

7. Ankoppelvorrichtung nach einem der vorhergehenden Ansprüche, dadurch gekennzeichnet, daß die zum Ausrichten des Teleskopstabes (14) den Stellgliedern (25) zugeführten Steuersignale gleichzeitig einem im betreffenden Raumflugkörper (10) vorgesehenen Bahnsteuerungssystem zum Annähern des Raumflugkörpers (11) an den zweiten Raumflugkörper (10) zugeführt sind.

## Claims

1. A docking device for spacecraft having a coupling cone (17) on one spacecraft (11) and a locking catch (I9) at the bottom (18) of the cone into which a head (15), provided with a detent (16), of a telescopic bar (14), mounted for extension on a second spacecraft (10) and able to be aligned by an optical control device, can be introduced, characterised in that the telescopic bar (14) is supported by springs (12, 13) and that the head (15) comprises an optical sensor (26) to detect light signals of a light transmitter (27) disposed at the bottom (18) of the cone, the output signals of which sensor control, through a control unit, positioning memhers (25) of the telescopic bar (14) for the alignment.

2. A docking device as claimed in Claim 1, characterised in that the telescopic bar (14) comprises an annular centring buffer (20) with a bumper (21) for the alignment of the spacecraft (10, 11) to be docked.

3. A docking device as claimed in Claim 1 or 2, characterised in that the positioning members (25) for the alignment of the telescopic bar (14) are associated with the springs (12, 13).

4. A docking device as claimed in any of Claims 1 to 3, characterised in that a quadrant photodiode is used for the optical sensor (26).

5. A docking device as claimed in Claim 4, characterised in that the output signals of the quadrant photodiode (26) control the positioning members (25) of the telescopic bar (14) through the control unit (14) in the direction of the light transmitter (27).

6. A docking device as claimed in any of Claims 1 to 5, characterised in that the light transmitter (27) disposed at the bottom (18) of the cone as a guiding beacon radiates modulated light with an angle of beam adapted to the angle of the cone.

7. A docking device as claimed in any of the preceding Claims, characterised in that the control signals fed to the positioning members (25) for the alignment of the telescopic bar (14) are simultaneously fed to a command system provided in the corresponding spacecraft (10) for the approach of the spacecraft (11) to the second spacecraft (10).

## Revendications

1°) Dispositif d'accouplement pour engins spatiaux, comportant un entonnoir d'accouplement (17) prévu sur l'un des engins spatiaux (11) et un piège à verrou (19) prévu au fond (18) de l'entonnoir et dans lequel pénètre une tête (15) munie d'un organe de verrouillage (16) et appartenant à un second engin spatial (10), ainsi qu'une tige télescopique (14) susceptible d'être alignée par une installation de commande optique, caractérisé en ce que la tige télescopique (14) s'appuie sur les ressorts (12, 13) et en ce que la tête (15) comporte un capteur optique (26) pour recevoir les signaux lumineux d'un émetteur de lumière (27) prévu au fond (18) de la trémie, capteur dont les signaux de sortie commandent l'alignement par les organes de réglage (25) de la tige télescopique (14) par l'intermédiaire d'une installation de réglage.

2°) Dispositif d'accouplement selon la revendication 1, caractérisé en ce que la tige télescopique (14) comporte un organe de centrage et d'amortissement (20), annulaire muni d'un rembourrage (21) pour aligner les engins spatiaux (10, 11) à accoupler.

3°) Dispositif d'accouplement selon les revendications 1 et 2, caractérisé en ce que les organes de réglage (25) pour l'alignement de la tige télescopique (14) comportent des ressorts (12, 13).

4°) Dispositif d'accouplement selon l'une des revendications 1 à 3, caractérisé par une photodiode à quadrants pour le capteur optique (26).

5°) Dispositif d'accouplement selon la revendication 4, caractérisé en ce que les signaux de sortie de la photodiode à quadrants (26) commandent les organes de réglage (25) de la tige télescopique (14) par l'intermédiaire de l'installation de réglage dans la direction de l'émetteur de lumière.

6°) Dispositif d'accouplement selon l'une des revendications 1 à 5, caractérisé en ce que l'émetteur de lumière (27 prévu au fond (18) de l'entonnoir émet de la lumière modulée comme élément-directeur avec un angle d'ouverture adapté à l'angle de l'entonnoir.

7°) Dispositif d'accouplement selon l'une des revendications précédentes, caractérisé en ce que les signaux de commande fournis aux organes de réglage (25) pour aligner la tige télescopique (14) sont en même temps fournis à un système de commande de trajectoire de l'engin spatial (10) correspondant pour rapprocher l'engin spatial (11) du second engin spatial (10).

FIG.1

FIG.2

FIG.3

FIG.4

FIG.5